# EUROPEAN PATENT SPECIFICATION

(11) **EP 0 916 420 B1**
(45) Date of publication and mention of the grant of the patent: **06.10.2004**
(21) Application number: 98309271.9
(22) Date of filing: 12.11.1998
(51) Int. Cl.: B21C 37/06, B21C 37/08

(54) **Method of fabricating metal pipe from weldable and ductile metals**
Verfahren zur Herstellung von Metallrohren aus schweissbaren duktilen Metallen
Méthode de fabrication des tubes métalliques des materiaux soudables et ductiles

(30) Priority: 12.11.1997 US 968642
(43) Date of publication of application: 19.05.1999
(73) Proprietor: KAISER AEROSPACE & ELECTRONICS CORPORATION, Foster City, California 94404 (US)
(72) Inventor: Glasier, Louis F., Jr., Anaheim, California 92806 (US); Dosdourian, Michael J., Whittier, California 90603 (US)
(74) Representative: Price, Nigel John King

(56) References cited:
- DE-A- 4 019 117
- DE-C- 3 801 621
- US-A- 3 222 905
- US-A- 4 690 716
- US-A- 5 332 454

## Description

The present invention relates to the forming of cylindrical metal tubular articles from a welded pipe blank. The present invention provides a unique process for forming an elongated, relatively thin-walled cylindrical tubular article, with enhanced metallurgical characteristics, from a welded pipe blank of considerably greater thickness. The present invention operates on the pipe blank by room temperature roll extrusion to provide a simultaneous reduction of wall thickness and elongation of the tubular wall structure.

It is well known in the art to produce thin walled metallic pipe of a desired length by roll extruding a relatively thick pipe blank into a thin walled pipe of increased length. Such pipes have been formed from wrought or cast seamless pipe blanks. When wrought or cast pipe blanks are utilized they are formed by various room or elevated temperature processes including roll extrusion into a final seamless thin walled pipe.

On the other hand, when welded pipes fabricated from thick or thin plate stock are utilized as starting blanks, the final result is a thick or thin walled pipe with the seam being defined by the weld; however in the processing of such welded pipe, roll extrusion is not utilized.

Thin walled seamless pipe has superior characteristics, such as uniform strength, corrosion resistance and the like when compared to the thin walled welded pipe. However, there is a significant cost differential between the two, with the seamless pipe being substantially more costly to fabricate than the welded seam pipe. The extra cost is attributable to the higher cost for wrought or cast seamless blanks relative to welded blanks. The present invention is directed to a unique process for forming an essentially seamless pipe from a welded seam pipe blank.

US 4,690,716 discloses seamless tubing formed from welded precursors of zirconium or titanium material by heating successive axial segments of welded tubing completely through the wall of the tubing to convert the material to the beta phase and then rapidly quenching the segments, with the heating and quenching effected so as to prevent the growth of beta grains within the material. The tubing is then subjected to cold reduction steps such as pilgering to reduce the wall thickness to that desired for the final tubing. The final sized material is then subjected to either a recrystallization or stress relief anneal.

The present invention provides the method of fabricating metal pipe from weldable and ductile metals comprising the steps of: utilizing a tubular pipe stock of a preselected length formed into a cylindrical shape from flat plate stock and having a weld seam formed from the parent material of the plate stock for joining the confronting ends of the cylindrically formed plate stock; cutting said pipe stock to form pipe blanks of a desired length; substantially full annealing said pipe blanks followed by rapid cooling and removing excess weldment from the outer surface of said pipe blanks; roll extruding said pipe blanks to form rolled pipe blanks of an increased length while reducing the wall thickness by at least 30%; and substantially full annealing said rolled pipe blanks followed by rapid cooling to remove mechanical strain resulting from the roll extrusion and to reform the grain structure of the weldment to be comparable to the metal microstructure of the parent non-welded material whereby the rolled pipe blanks are finished seam free pipes.

The present invention further provides the method of fabricating metal pipe from weldable and ductile metals comprising the steps of: forming a tubular pipe stock of a preselected length into a pipe blank of a cylindrical shape from a flat plate stock and having a weld seam formed from the parent material of the plate stock for joining the confronting ends of the cylindrically formed plate stock; fully annealing said formed pipe blank followed by rapid cooling; straightening and rounding said pipe blank into a circular cross section; substantially full annealing said pipe blank followed by rapid cooling and removing excess weldment from the outer surface of said pipe blank; roll extruding said pipe blank to form a rolled pipe blank of an increased length while reducing the wall thickness by at least 30%; and substantially full annealing said rolled pipe blank followed by rapid cooling to remove mechanical strain resulting from the roll extrusion and to reform the grain structure of the weldment to be comparable to the metal microstructure of the parent non-welded material whereby said rolled pipe blank is a finished seam free pipe.

Thus in the present invention the welded pipe blank is processed such that the microstructure of the weld in the pipe becomes substantially obliterated by complete metallurgical recrystallization and chemical homogenization such that it is substantially not distinguishable from the parent metal of the original plate stock. This is essentially seamless or seam free pipe with a wrought equiaxed grain structure. This is accomplished through the application of thermal processing and of controlled mechanical deformation at room temperature of the original welded pipe blank.

The roll, extrusion step where noted above can be performed by apparatus and techniques well known in the tube or pipe forming art. For example the roll extrusion step can be performed by the method and apparatus shown and described in U.S. Patent No. 3,222,905 issued December 14, 1965 to A. W. Ernestus for "Method Of Forming Tubular Metal Products By Extrusive Rolling".

Thus, the present invention provides an improved method of fabricating substantially seam free metal pipes from welded pipe blanks which in comparison to metal pipes as presently made from welded pipe blanks have greatly improved mechanical strength and toughness, and increased corrosion resistance. This is due to the enhanced microstructural uniformity and the elimination of the mechanical and metallurgical notch concentration effects of the weldment.

Thus, it is an object of the present invention to provide a unique process for making a welded metal pipe which is essentially seamless or seam free.

It is another object of the present invention to make such a seamless or seam free pipe from welded pipe stock with the process substantially reforming the weldment seam to have a microstructure substantially the same as the parent material.

Other objects, features, and advantages of the present invention will become apparent from the subsequent description and the appended claims, taken in conjunction with the accompanying drawings, in which:
Figure 1 is a block diagram showing the STEPS A-F utilized in the process of the present invention;
Figure 2 is photomicrographs to one hundred times size of a Schedule 40S pipe stock after STEP B and showing the different grain structure as between the parent metal and the weld metal;
Figure 3 is photomicrographs to one hundred times size of the pipe stock of Figure 2 after the further annealing step of STEP D and showing the grain structures of the weld metal at two different annealing temperatures; and
Figure 4 is photomicrographs to one hundred times size of the pipe blank formed from the pipe stock of Figure 2 after the roll extrusion of STEP E and annealing of STEP F.

In the description which follows a number of references are made to terms and specifications well known in the art. For convenience such terms and specifications are set forth in the GLOSSARY OF TERMS AND SPECIFICATIONS following the description.

The process of the present invention can be utilized for the formation of substantially seamless pipe from metals such as stainless steel, titanium, aluminum, or any substantially weldable, ductile metal alloy . In the description which follows the process is utilized with pipe made from ASTM/ASME-A/SA312 austenitic stainless steel. In addition, the process of the present invention can be used with welded pipe blanks covering a wide range of diameters and wall thicknesses.

The welded pipe blank is formed from flat plate stock. After the plate stock is formed into a cylindrical shape, the confronting, axially extending end surfaces are connected by a weldment which is made by fusion welding, with or without filler metal having a Composition essentially the same as the parent material of the plate stock. However, the result is a final welded pipe in which the microstructure of the weldment seam is substantially different from that of the parent material. It is the weldment seam which provides the welded seam pipe with the inferior strength, corrosion resistance and other characteristics relative to a seamless pipe. This problem is, to a great extent, overcome by the substantially seam free pipe formed pursuant to the present invention.

For example the process of the present invention can be used to convert ASTM/ASME A/SA312 austenitic stainless steel, welded schedule 40S pipe wall thickness in Nominal Pipe Size (NPS) from 150mm (6-inches) (170 mm (6.625-inches)) through 610mm (24-inches) (610mm (24.000-inches)) in outside diameter to equivalent seamless schedule 5S and 10S pipe wall thickness in Nominal Pipe Size (NPS) from 150mm (6-inches) (170mm (6.625-inches)) through 610mm (24-inches) (610mm (24.000-inches)) in outside diameter (see following table of pipe diameter sizes and wall thickness schedules).

| CHART A | | | | |
|---|---|---|---|---|
| NOMINAL PIPE SIZES (NPS) AND SCHEDULES (WALL THICKNESS) | | | | |
| NPS | Actual OD | Sch 40S | Sch 10S | Sch 5S |
| 150 mm (6") | 170 mm (6.625") | 7 mm (0.280") | 3 mm (0.134") | 2.5 mm (0.100") |
| 200 mm (8") | 220 mm (8.625") | 8 mm (0.322") | 4 mm (0.148") | 2.5 mm (0.100") |
| 250 mm (10") | 275 mm (10.750") | 9 mm (0.365") | 4 mm (0.165") | 3 mm (0.134") |
| 300 mm (12") | 325 mm (12.750") | 9.5 mm (0.375") | 4.5 mm (0.180") | 4 mm (0.156") |
| 360 mm (14") | 360 mm (14.000") | 9.5 mm (0.375") | 5 mm (0.188") | 4 mm (0.156") |
| 400 mm (16") | 400 mm (16.000") | 9.5 mm (0.375") | 5 mm (0.188") | 4 mm (0.165") |
| 460 mm (18") | 460 mm (18.000") | 9.5 mm (0.375") | 5 mm (0.188") | 4 mm (0.165") |
| 510 mm (20") | 510 mm (20.000") | 9.5 mm (0.375") | 5.5 mm (0.218") | 5 mm (0.188") |
| 560 mm (22") | 560 mm (22.000") | 9.5 mm (0.375") | 6 mm (0.250") | 5.5 mm (0.218") |
| 610 mm (24") | 610 mm (24.000") | 9.5 mm (0.375") | 6 mm (0.250") | 5.5 mm (0.218") |

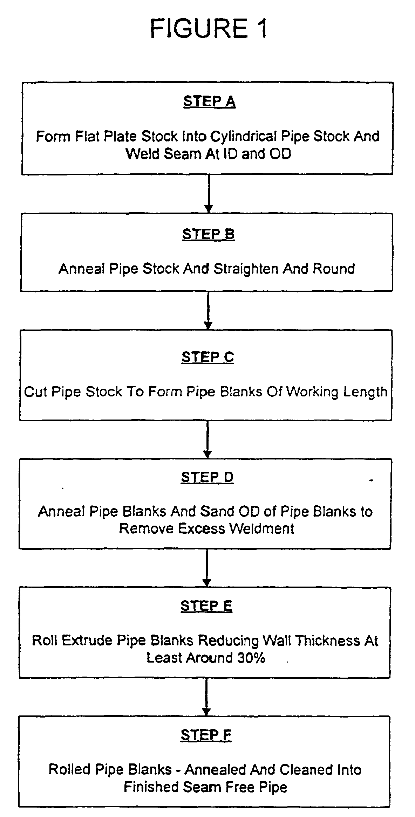

The processing steps to produce the seam free pipe from a welded pipe blank are shown as STEPS A-F in Figure 1. Since the apparatus for metal forming of STEPS A, B, C and D is well known in the art, as exemplified by the '905 patent, supra, and since such specific details do not constitute a part of the present invention, such details have been omitted for purposes of simplicity.

### STEP A

The schedule 40S welded stainless steel pipe stock is fabricated in compliance with ASTM/ASME-A/SA312, Type 304/304L. The pipe stock is fabricated from flat plate stock, cylindrically formed, gas tungsten arc welded (GTAW) along the confronting end surfaces from both sides (OD & ID) without filler material. The pipe stock, as formed, could typically have a length of around 6m (20 feet).

### STEP B

Next, the pipe stock is fully annealed at approximately 1040°C (1900°F), and rapidly cooled to below 425°C (800°F) within approximately 10 minutes. The pipe stock is then straightened and rounded into a circular cross section.

### STEP C

The pipe stock, which as noted could be as long as around 6m (20 feet), is cut to various lengths to form pipe blanks of selected lengths. These selected lengths can vary depending upon the final pipe or pipes to be produced.

### STEP D

The pipe blanks are then cleaned and fully annealed, between 1050°C (1925°F) and 1120°C (2050°F) for approximately 1/2 hour, followed by rapid cooling. The pipe blank is then OD sanded to remove the weld metal build up at the weldment seam and to provide a smooth outer surface.

### STEP E

Next, the pipe blank is roll extruded at room temperature into thin wall pipe in a manner to be generally described. The roll extruding step could be performed in one pass or several passes depending upon the size of the pipe blank and the final wall thickness and final length desired. As can be seen from CHART A, the wall thickness of the schedule 40S pipe blank is reduced to a schedule 10S wall thickness or further to a schedule 5S wall thickness. Thus, the wall thickness can be typically reduced by at least 30% from the pipe stock to the finally formed pipe blank.

The roll extrusion of STEP E is a room temperature rotary mechanical deformation process in which a rolling tool having a series of circumferentially spaced rotating hardened steel rolls are impressed into the pipe wall thickness from the inside diameter surface of a pipe while the outside diameter of the pipe is restrained by a hardened steel containment or die ring. As the pipe length is withdrawn over the rotating rolls and through the die ring this extrusive rolling reduces the wall thickness of the entire pipe and increases the overall length while maintaining a constant outside diameter. As will be described below, single or multiple reduction steps of the wall thickness may be performed to obtain the desired final wall thickness which provides a resultant mechanical strain from the total wall reduction. Complete recrystallization of the weld is then provided in the subsequent annealing cycle of STEP F.

### STEP F

The roll extruded pipe blank is fully annealed to remove the mechanical strain from roll extrusion processing and to further chemically homogenize and recrystallize the weld microstructure to an equiaxed wrought grain structure comparable to the parent (unwelded) metal microstructure.

The as-rolled pipe blanks are cleaned and then fully annealed by being heated to approximately 1050°C (1925°F), and rapid cooled to below approximately 425°C (800°F) within around 10 minutes. The pipes are then descaled, and sanded as required.

Thus, the process can convert stainless steel (ASTM/ASME-A/SA312 Type 304/304L) welded pipe from schedule 40S wall thickness to equivalent seamless and fully wrought schedule 5S and 10S wall thickness pipe blank in 150 through 610mm (6 through 24 inch) Nominal Pipe Sizes (NPS).

The mechanical properties of the converted schedule 10S pipe blanks can meet or exceed all the ASTM/ASME-A/SA312 seamless pipe specification requirements of ultimate tensile, yield strength, and tensile elongation, in the longitudinal and circumferential test directions. The pipe blank can also meet the ASTM/ASME-A/SA312 flatten and guided bend tests.

Additional mechanical requirements such as reverse flattening, flare test, flange test and hardness requirements of ASTM-A249 (a specification for both welded and seamless tubes) can also be met or exceeded.

The schedule 10S stainless steel pipe blank will meet or exceed numerous ASTM corrosion test requirements, such as, Weld Decay corrosion per ASTM-A249 and intergranular corrosion (IGA) tests per ASTM-A 262 practices A, B, C, E and F. In particular, the weld decay test results per ASTM A-249 are significant in that a weld-to-parent metal corrosion ratio as high as 1.25 is considered acceptable while the ratio of the typical seam free pipe processed in accordance with the present invention is less than 1.0. This superior corrosion performance resulted from the recrystallization and homogenization of the weld.

Evaluation of the microstructure of the pipe blank schedule 10S wall thickness pipe blank revealed a wrought structure throughout with ASTM grain sizes ranging from Number 4 to 6 for the parent (unwelded) metal and recrystallized, fully wrought, equiaxed ASTM grain sizes ranging from Number 5 to 6.5 in the weld metal and heat affected zone of the former weldment.

Thus, the substantially seam free pipe can essentially provide all the mechanical properties and superior corrosion resistance of seamless ASTM/ASME-A/SA312 pipe.

In general, and as noted above, the process of the present invention utilizes an extrusive rolling process similar to that as shown and described in U.S. Patent No. 3,222,905 for "Method Of Forming Tubular Metal Products By Extrusion Rolling" issued December 14, 1965 to A. W. Ernestus. Thus, in the present invention a welded pipe blank that initially is of a relatively short length and thick-walled, e.g. as shown in Chart A, can be roll extruded by apparatus such as that shown and described in the '905 patent, supra. As shown in the '905 patent, an axial pulling force can be applied to the pipe blank via a gripping device in engagement with a coupling groove machined in its inner wall near one end, or an annular inwardly-projecting lip formed at one end of the pipe blank. The pipe blank is then inserted into an annular, ring like sizing die and a draft coupling is inserted into the pipe blank and coupled to the end of the pipe blank either with the gripping device or at the projecting lip. A rolling tool is then applied to the inner surface of the pipe blank and is held in fixed, radially opposed relation to the die ring and a strong axial pull is applied to the end of the pipe blank by a suitable draft unit through the draft coupling. As noted the rolling tool has a series of circumferentially spaced rotatable hardened steel rolls that can be actuated radially outwardly to be compressively engaged with the inside surface of the pipe blank. Thus, the pipe blank is drawn through the die ring while its interior is compressively rolled, thereby enlarging its inside diameter, reducing its wall thickness, extruding it axially with the assistance of the axial pull as it is drawn through the constraining outer die ring.

While the '905 patent shows only a rolling tool with a single set of hardened steel rollers, multiple sets of steel rollers can be used to provide a further reduction in wall thickness. This latter type of construction will facilitate the rolling extrusion of the pipe blank to the desired wall thickness and length in one pass through the rolling tool and die ring.

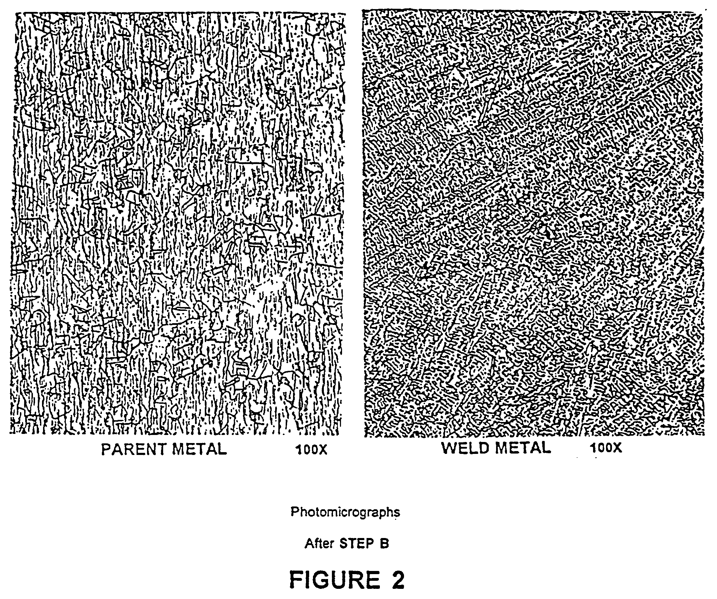

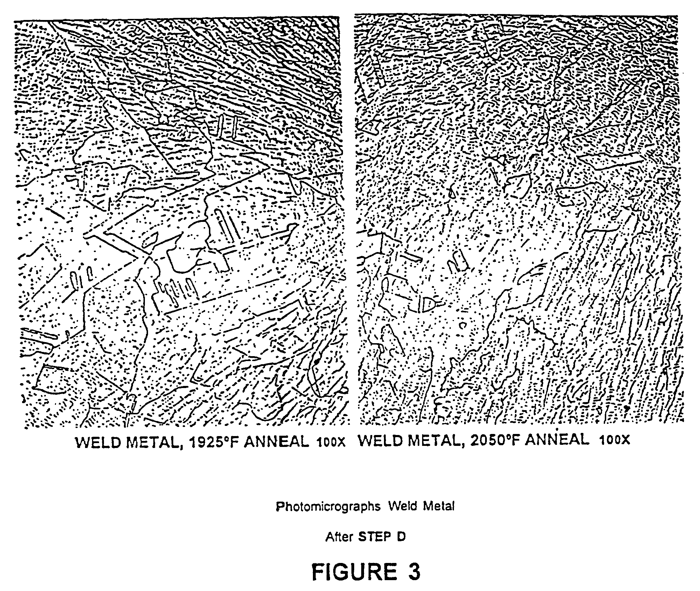

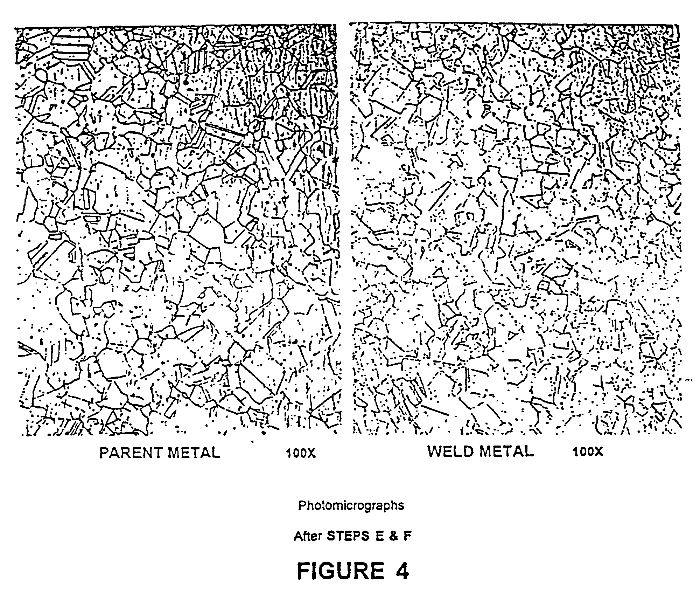

The result of the above described process is the essential obliteration of the weld seam by the substantially complete metallurgical recrystallization and chemical homogenization whereby the weldment and parent material are essentially of the same grain structure. This can be seen from the photomicrographs of Figures 2-4 of the process as applied to the welded stainless steel pipe stock as noted. Thus, Figure 2 clearly shows the different grain structures between the material of the weld seam and that of the parent metal. Figure 3 shows a significant degree of uniformity between the grain structure of the material of the weldment and the parent material due to recrystallization (compare Figure 3 to Figure 2). Finally, after the process has been completed, the grain structure of the material of the weldment and that of the parent metal are substantially metallurgically uniform in grain structure (see Figure 4). Thus, the process of the present invention effectively converts welded pipe stock into a finished, equivalent seamless pipe blank.

While the above description has been made with regard to stainless steel, it should be understood that the process can be applied to other ferrous materials, as well as other metals such as titanium, aluminum and other substantially weldable and ductile metals. It should also be understood that while the preceding description noted the conversion of the pipe stock of schedule 40S wall thickness to schedule 10S wall thickness, the process could be applied, as well, to conversion from schedule 40S wall thickness to schedule 5S wall thickness or other similar reductions.

### GLOSSARY OF TERMS AND SPECIFICATIONS

1. ASTM-A312 austenitic stainless steel: An American Society for Testing and Materials (ASTM) specification entitled, "Seamless and Welded Austenitic Stainless Steel Pipe", representing forty-four (44) grades of austenitic stainless steel, including grades of type 304 and 316 compositions. "Austenitic" refers to the metallurgical structure of the alloys.
2. ASME-SA312 austenitic stainless steel: An American Society of Mechanical Engineers (ASME) specification entitled, "Seamless and Welded Austenitic Stainless Steel Pipes", essentially identical to ASTM-A312.
3 Schedule 40S, 10S, etc.: Schedule refers to the wall thickness of the pipe blank.
4. OD: OD refers to the outside diameter of the pipe.
5. ID: ID refers to the inside diameter of the pipe.
6. Nominal Pipe Size (NPS): NPS refers to the outside diameter of a pipe for pipes up to and including 300mm (12 inches). The inside diameter (ID) for pipes up to an including 300 mm (12 inches) is additionally approximately equal to the NPS. 360mm (14 inch) pipes and greater also refer to the outside diameter of the pipe as the nominal pipe size.
7. Equiaxed Wrought Grain Structure: Equiaxed grain structure refers to a microstructure consisting of grains having length, width and height dimensions of approximately the same size. The grain size of an alloy generally is a relative measurement of the agglomeration size of coalesced atomic crystals. Wrought refers to the processing history of the grains of the pipe where the pipe has been developed by subsequent mechanical working, such as forging, hammering, and extrusion, as opposed to the grains being in a cast condition.
8. Weld Decay ASTM-A249: This test is directed towards tubing, but is also used with welded pipe. The test, however, is not required for welded pipe. The test includes submerging pipe samples in boiling 20% hydrochloric acid for a sufficient time to remove 40 to 60% of the base metal. The average reduction in weld metal thickness is compared to base metal thickness, where a ratio of 1.25 or less is acceptable.
9. IGA (Intergranular Attack) Corrosion Testing per ASTM-A262, Practices A, B, C, E and F.: A series of chemical exposure tests that determines if a stainless steel is sensitized to intergranular (grain boundary) attack in various corrosive environments due to chemistry and the thermal-mechanical history of the pipe.

## Claims

1. The method of fabricating metal pipe from weldable and ductile metals comprising the steps of:
a) utilizing a tubular pipe stock of a preselected length formed into a cylindrical shape from flat plate stock and having a weld seam formed from the parent material of the plate stock for joining the confronting ends of the cylindrically formed plate stock;
b) cutting said pipe stock to form pipe blanks of a desired length;
c) substantially full annealing said pipe blanks followed by rapid cooling and removing excess weldment from the outer surface of said pipe blanks;
d) roll extruding said pipe blanks to form rolled pipe blanks of an increased length while reducing the wall thickness by at least 30%; and
e) substantially full annealing said rolled pipe blanks followed by rapid cooling to remove mechanical strain resulting from the roll extrusion and to reform the grain structure of the weldment to be comparable to the metal microstructure of the parent non-welded material whereby the rolled pipe blanks are finished seam free pipes.

2. The method of fabricating metal pipe from weldable and ductile metals comprising the steps of:
a) forming a tubular pipe stock of a preselected length into a pipe blank of a cylindrical shape from a flat plate stock and having a weld seam formed from the parent material of the plate stock for joining the confronting ends of the cylindrically formed plate stock;
b) fully annealing said formed pipe blank followed by rapid cooling;
c) straightening and rounding said pipe blank into a circular cross section;
d) substantially full annealing said pipe blank followed by rapid cooling and removing excess weldment from the outer surface of said pipe blank;
e) roll extruding said pipe blank to form a rolled pipe blank of an increased length while reducing the wall thickness by at least 30%; and
f) substantially full annealing said rolled pipe blank followed by rapid cooling to remove mechanical strain resulting from the roll extrusion and to reform the grain structure of the weldment to be comparable to the metal microstructure of the parent non-welded material whereby said rolled pipe blank is a finished seam free pipe.

3. The method of any one of claims 1 and 2 with said metal pipe stock being made of an ASTM/ASME-A/SA312 austenitic stainless steel.

4. The method of claim 1 comprising the steps of:
forming said tubular pipe stock of a preselected length into said cylindrical shape from said flat plate stock and having a weld seam formed from the parent material of said plate stock for joining the confronting ends of the cylindrically formed plate stock;
fully annealing said formed pipe stock followed by rapid cooling, straightening and rounding said pipe stock into a circular cross section; and
cutting said pipe stock to form said pipe blanks of said desired length.

5. The method of any one of claims 1, 2 and 4 with said metal pipe stock being made of austenitic stainless steel.

6. The method of any one of claims 1, 2 and 4 with said metal pipe stock being made of austenitic stainless steel, said weldment as reformed having an equiaxed wrought grain structure comparable to the grain structure of the parent metal microstructure as fully annealed.

7. The method of claim 1, wherein:
said tubular pipe stock in Step a) is austenitic stainless steel;
between Steps a) and b) said pipe stock is fully annealed at approximately 1040°C (1900°F) followed by rapid cooling;
said substantially full annealing of Step c) is conducted at between 1050°C (1925°F) and 1120°C (2050°F); and
said substantially full annealing of Step e) is conducted at approximately 1050°C (1925°F).

8. The method of claim 2, wherein:
said tubular pipe stock in Step a) is austenitic stainless steel;
said full annealing of Step b) is conducted at approximately 1040°C (1900°F) ;
said substantially full annealing of Step d) is conducted at between 1050°C (1925°F) and 1120°C (2050°F); and
said substantially full annealing of Step f) is conducted at approximately 1050°C (1925°F).

9. The method of any one of claims 1, 2, 4, 7 and 8 with said weldment as reformed having an equiaxed wrought grain structure comparable to the grain structure of the parent metal microstructure as fully annealed.

## Patentansprüche

1. Verfahren zum Herstellen von Metallrohren aus schweißbaren und duktilen Metallen, mit den Schritten:
a) ein rohrförmiger Rohrmaterialvorrat einer vorgewählten Länge, der aus einem flachen Blechmaterialvorrat zu einer zylindrischen Form geformt wurde und eine Schweißnaht aufweist, die aus dem Ausgangsmaterial des Blechmaterialvorrats ausgebildet ist, wird verwendet, um die einander gegenüberliegenden Enden des zylindrisch geformten Blechmaterialvorrats zu verbinden;
b) der Rohrmaterialvorrat wird zugeschnitten, um Rohrrohlinge einer gewünschten Länge auszubilden;
c) die Rohrrohlinge werden im Wesentlichen vollständig ausgeglüht, gefolgt von einer raschen Abkühlung und einem Entfernen von überschüssigem Schweißmaterial von der äußeren Oberfläche der Rohrrohlinge;
d) Walz-Strangpressen der Rohrrohlinge, um gewalzte Rohrrohlinge einer größeren Länge auszubilden und zugleich die Wandstärke um mindestens 30% zu reduzieren; und
e) die gewalzten Rohrrohlinge werden im Wesentlichen vollständig ausgeglüht, gefolgt von einer raschen Abkühlung, um mechanische Spannungen zu beseitigen, die von dem Walz-Strangpressen resultieren, und um die Kornstruktur des Schweißmaterials neu auszubilden, so dass diese vergleichbar zu der Metall-Mikrostruktur des ungeschweißten Ausgangsmaterials ist, so dass die gewalzten Rohrrohlinge fertige, nahtfreie Rohre darstellen.

2. Verfahren zum Herstellen von Metallrohren aus schweißbaren und duktilen Metallen, mit den Schritten:
a) ein rohrförmiger Rohrmaterialvorrat einer vorgewählten Länge wird aus einem flachen Blechmaterialvorrat zu einem Rohrrohling einer zylindrischen Form geformt, der eine Schweißnaht aufweist, die aus dem Ausgangsmaterial des Blechmaterialvorrats ausgebildet ist, um die einander gegenüberliegenden Enden des zylindrisch geformten Blechmaterialvorrats zu verbinden;
b) der geformte Rohrrohling wird vollständig ausgeglüht, gefolgt von einer raschen Abkühlung;
c) der Rohrrohling wird zu einem kreisförmigen Profil geradegerichtet und gerundet;
d) der Rohrrohling wird im Wesentlichen vollständig ausgeglüht, gefolgt von einer raschen Abkühlung und einem Entfernen von überschüssigem Schweißmaterial von der äußeren Oberfläche des Rohrrohlings;
e) des Rohrrohlings Walz-Strangpressen, um einen gewalzten Rohrrohling einer größeren Länge auszubilden, wobei zugleich die Wandstärke um mindestens 30% reduziert wird; und
f) der gewalzte Rohrrohling wird im Wesentlichen vollständig ausgeglüht, gefolgt von einer raschen Abkühlung, um eine mechanische Spannung zu entfernen, die von dem Walz-Strangpressen resultiert, und um die Kornstruktur des Schweißmaterials neu auszubilden, so dass diese vergleichbar zu der Metall-Mikrostruktur des ungeschweißten Ausgangsmaterials ist, so dass der gewalzte Rohrrohling ein fertiges, nahtfreies Rohr darstellt.

3. Verfahren nach einem der Ansprüche 1 und 2, bei dem der Metall-Rohrmaterialvorrat aus einem austenitischen ASTM/ ASME - A/SA312-Edelstahl hergestellt ist.

4. Verfahren nach Anspruch 1, mit den Schritten:
der rohrförmige Rohrmaterialvorrat einer vorgewählten Länge wird aus dem flachen Blechmaterialvorrat zu einer zylindrischen Form geformt, mit einer Schweißnaht, die aus dem Ausgangsmaterial des Blechmaterialvorrats ausgebildet wird, um die einander gegenüberliegenden Enden des zylindrisch geformten Blechmaterialvorrats zu verbinden;
der geformte Rohrmaterialvorrat wird vollständig ausgeglüht, gefolgt von einer raschen Abkühlung, einem Geradeziehen und Runden des Rohrmaterialvorrats zu einem kreisförmigen Profil; und
der Rohrmaterialvorrat wird zugeschnitten, um die Rohrrohlinge der gewünschten Länge auszubilden.

5. Verfahren nach einem der Ansprüche 1, 2 und 4, bei dem der Metall-Rohrmaterialvorrat aus einem austenitischen Edelstahl hergestellt wird.

6. Verfahren nach einem der Ansprüche 1, 2 und 4, bei dem der Metall-Rohrmaterialvorrat aus einem austenitischen Edelstahl hergestellt wird, wobei das Schweißmaterial, das neu ausgebildet wird, eine einachsige Schmiede-Kornstruktur aufweist, die vergleichbar zu der Mikrostruktur des vollständig ausgeglühten Ausgangsmetalls ist.

7. Verfahren nach Anspruch 1, bei dem:
der rohrförmige Rohrmaterialvorrat in dem Schritt a) ein austenitischer Edelstahl ist;
zwischen den Schritten a) und b) der Rohrmaterialvorrat bei etwa 1040°C (1900°F) vollständig ausgeglüht wird, gefolgt von einer raschen Abkühlung;
das im Wesentlichen vollständige Ausglühen des Schrittes d) zwischen etwa 1050°C (1925°F) und 1120°C (2050°F) ausgeführt wird; und
das im Wesentlichen vollständige Ausglühen des Schrittes e) bei etwa 1050°C (1925°F) ausgeführt wird.

8. Verfahren nach Anspruch 2, bei dem:
der rohrförmige Rohrmaterialvorrat in dem Schritt a) ein austenitischer Edelstahl ist;
das vollständige Ausglühen des Schrittes b) bei etwa 1040°C (1900°F) ausgeführt wird;
das im Wesentlichen vollständige Ausglühen des Schrittes d) zwischen etwa 1050°C (1925°F) und 1120°C (2050°F) ausgeführt wird; und
das im Wesentlichen vollständige Ausglühen des Schrittes f) bei etwa 1050°C (1925°F) ausgeführt wird.

9. Verfahren nach einem der Ansprüche 1, 2, 4, 7 und 8, bei dem das Schweißmaterial, das neu gebildet wurde, eine einachsige Schmiede-Kornstruktur aufweist, die vergleichbar zu der Kornstruktur der Mikrostruktur des vollständig ausgeglühten Ausgangsmetalls ist.

## Revendications

1. Procédé de fabrication d'un tuyau métallique à partir de métaux soudables et ductiles, comportant les étapes consistant à:
a) utiliser une matière première de tuyau tubulaire d'une longueur présélectionnée formée en une forme cylindrique à partir d'une matière première de plaque plate, et ayant un joint de soudure formé à partir du matériau parent de la matière première de plaque pour réunir les extrémités en vis-à-vis de la matière première de plaque formée en cylindre;
b) découper ladite matière première de tuyau pour former des ébauches de tuyaux d'une longueur souhaitée;
c) recuire sensiblement complètement lesdites ébauches de tuyaux, avec ensuite refroidissement rapide et enlèvement de la soudure en excès de la surface extérieure desdites ébauches de tuyaux,
d) extruder-laminer lesdites ébauches de tuyaux pour former des ébauches de tuyaux laminées d'une longueur accrue tout en réduisant l'épaisseur de paroi d'au moins 30 %; et
e) recuire sensiblement complètement lesdites ébauches de tuyaux laminées, avec ensuite refroidissement rapide pour éliminer la contrainte mécanique résultant de l'extrusion-laminage et pour reformer la structure de grain de la soudure pour qu'elle soit comparable à la microstructure métallique du matériau non soudé parent, grâce à quoi les ébauches de tuyaux laminées sont des tuyaux finis sans joint.

2. Procédé de fabrication d'un tuyau métallique à partir de métaux soudables et ductiles, comportant les étapes consistant à:
a) former une matière première de tuyau tubulaire d'une longueur présélectionnée en une ébauche de tuyau d'une forme cylindrique à partir d'une matière première de plaque plate et ayant un joint de soudure formé à partir du matériau parent de la matière première de plaque pour réunir les extrémités en vis-à-vis de la matière première de plaque formée en cylindre;
b) recuire complètement ladite ébauche de tuyau formée, avec ensuite refroidissement rapide;
c) redresser et arrondir ladite ébauche de tuyau en une section transversale circulaire;
d) recuire sensiblement complètement ladite ébauche de tuyau, avec ensuite refroidissement rapide et enlèvement de la soudure en excès de la surface extérieure de ladite ébauche de tuyau;
e) extruder-laminer ladite ébauche de tuyau pour former une ébauche de tuyau laminée d'une longueur accrue tout en réduisant l'épaisseur de paroi d'au moins 30 %; et
f) recuire sensiblement complètement ladite ébauche de tuyau laminée, avec ensuite refroidissement rapide pour éliminer la contrainte mécanique résultant de l'extrusion-laminage et pour reformer la structure de grain de la soudure pour qu'elle soit comparable à la microstructure métallique du matériau non soudé parent, grâce à quoi ladite ébauche de tuyau laminée est un tuyau fini sans joint.

3. Procédé selon l'une quelconque des revendications 1 et 2, dans lequel ladite matière première de tuyau métallique est constituée d'un acier inoxydable austénitique ASTM/ASME-A/SA312.

4. Procédé selon la revendication 1, comportant les étapes consistant à:
former ladite matière première de tuyau tubulaire d'une longueur présélectionnée en ladite forme cylindrique à partir de ladite matière première de plaque plate et ayant un joint de soudure formé à partir du matériau parent de ladite matière première de plaque pour réunir les extrémités en vis-à-vis de la matière première de plaque formée en cylindre;
recuire complètement ladite matière première de tuyau formée, avec ensuite refroidissement rapide, redressement et arrondissement de ladite matière première de tuyau en une section transversale circulaire; et
découper ladite matière première de tuyau pour former lesdites ébauches de tuyaux de ladite longueur souhaitée.

5. Procédé selon l'une quelconque des revendications 1, 2 et 4, ladite matière première de tuyau métallique étant constituée d'acier inoxydable austénitique.

6. Procédé selon l'une quelconque des revendications 1, 2 et 4, ladite matière première de tuyau métallique étant constituée d'acier inoxydable austénitique, ladite soudure à l'état reformé ayant une structure de grain corroyée équiaxe comparable à la structure de grain de la microstructure de métal parent à l'état entièrement recuit.

7. Procédé selon la revendication 1, dans lequel:
ladite matière première de tuyau tubulaire de l'étape a) est de l'acier inoxydable austénitique;
entre les étapes a) et b), ladite matière première de tuyau est entièrement recuite à approximativement 1040°C (1900°F), avec ensuite refroidissement rapide;
ledit recuit sensiblement complet de l'étape c) est effectué entre environ 1050°C (1925°F) et 1120°C (2250°F); et
ledit recuit sensiblement complet de l'étape e) est effectué approximativement à 1050°C (1925°F).

8. Procédé selon la revendication 2, dans lequel:
ladite matière première de tuyau tubulaire de l'étape a) est de l'acier inoxydable austénitique;
ledit recuit complet de l'étape b) est effectué approximativement à 1040°C (1900°F);
ledit recuit sensiblement complet de l'étape d) est effectué entre environ 1050°C (1925°F) et 1120°C (2050°F); et
ledit recuit sensiblement complet de l'étape f) est effectué approximativement à 1050°C (1925°F).

9. Procédé selon l'une quelconque des revendications 1, 2, 4, 7 et 8, dans lequel ladite soudure à l'état reformé a une structure de grain corroyée équiaxe comparable à la structure de grain de la structure de métal parent à l'état entièrement recuit.
